# EUROPEAN PATENT APPLICATION

(11) **EP 4 831 045 A1**
(43) Date of publication of application: **28.10.2026**
(21) Application number: 24908370.0
(22) Date of filing: 18.12.2024
(51) Int. Cl.: B62D 57/032, B25J 5/00, B25J 9/12, B25J 9/10

(54) **MULTI-LEGGED ROBOT**

(30) Priority: 18.12.2023 KR 20230184529
(71) Applicant: Rainbow Robotics Inc., Sejong-si 30141 (KR)
(72) Inventor: OH, Jun Ho, Seoul 05553 (KR); YOON, Tae Su, Daejeon 34050 (KR); JEONG, Ui Uk, Daejeon 34049 (KR); JEONG, Hyo Bin, Daejeon 34049 (KR)
(74) Representative: Viering, Jentschura & Partner mbB Patent- und Rechtsanwälte
(86) International application number: PCT/KR2024/097156
(87) International publication number: WO 2025/136066

(57) **Abstract**

A multi-legged robot according to an embodiment of the present invention includes: a body; and a plurality of legs coupled to the body, wherein each leg comprises: a drive module comprising first to third drive motors modularized, the first drive motor for generating a drive force for rotating a first drive shaft, the second drive motor located on one side of the rear end of the first drive motor and having a second drive shaft located horizontally with respect to the first drive shaft, and the third drive motor coupled to the front end of the second drive motor and having a third drive shaft located on the same line as the second drive shaft; a first decelerator having one end portion coupled to the first drive shaft of the first drive motor and the other end portion coupled to the body in such a way as to amplify torque output from the first drive motor to enable the first drive motor to roll with respect to the body; a second decelerator coupled to the second drive shaft of the second drive motor in such a way as to amplify torque output from the second drive motor to allow a knee pitch joint connected thereto to be rotatable; and a third decelerator located between the third drive motor and the second decelerator in such a way as to be coupled to the third drive shaft of the third drive motor to amplify torque output from the third drive motor and thus allow a hip pitch joint connected thereto to be rotatable.

## Description

### Technical Field

The present invention relates to a multi-legged robot, more specifically to a multi-legged robot that is capable of allowing legs to be provided with drive modules each having a plurality of modularized drive motors to thus unify and simplify power supply structures and communication connection structures so that the legs can move more freely, without having any limitations in their motion.

### Background Art

A robot is a multi-functional manipulator that is designed to perform specific operations and works through its programmed variable motions. A robot is widely used in various fields such as manufacturing, delivery, exploration, medicine, monitoring, patrol, and the like.

A robot having an industrial robot arm is configured to be physically fixed to a given position, and a robot having one or more legs or wheels is provided movably. The movable robot may be more widely available than the fixed robot.

A representative example of the movable robot is a multi-legged robot having one or more legs, for example, a four-legged robot having two legs on each of both sides thereof. The multi-legged robot requires a walking control technology in which the multi-legged robot does not step on or pass over obstacles, while moving, and keeps its balance and speed stably, while avoiding contacts with obstacles.

In the case of a conventional multi-legged robot, each leg includes a first drive motor mounted on a body, a first decelerator coupled to the first drive motor, a second drive motor coupled to the first decelerator, a second decelerator coupled to the second drive motor, a third drive motor coupled to the second decelerator, and a third decelerator coupled to the third drive motor.

To be specific, the leg can perform, for example, roll through the first drive motor and the first decelerator, perform, for example, hip pitch through the second drive motor and the second decelerator, and perform, for example, knee pitch through the third drive motor and the third decelerator.

In the case of the leg of the conventional multi-legged robot, however, power lines for power supply should be connected to the respective drive motors, which makes power connection structures complicated, causes the parts constituting the leg to be limited in their motion, and creating problems such as joint twist, and the like.

Therefore, there is a need to develop a multi-legged robot that has a new configuration capable of simplifying power connection structures of legs to allow motions of joints of the legs to be more freely performed and strengthening waterproofing functions thereof.

### Disclosure

### Technical Problem

Accordingly, it is an object of the present invention to provide a multi-legged robot that is capable of allowing legs to be provided with drive modules each having a plurality of modularized drive motors to thus unify and simplify power supply structures and communication connection structures so that the legs can move more freely, without having any limitations in their motion.

The technical objects to be achieved through the present invention are not limited as mentioned above, and other technical objects not mentioned herein will be obviously understood by one of ordinary skill in the art through the following description.

### Technical Solution

According to an embodiment of the present invention, a multi-legged robot may include: a body; and a plurality of legs coupled to the body, wherein each leg may include: a drive module comprising first to third drive motors modularized, the first drive motor for generating a drive force for rotating a first drive shaft, the second drive motor located on one side of the rear end of the first drive motor and having a second drive shaft located horizontally with respect to the first drive shaft, and the third drive motor coupled to the front end of the second drive motor and having a third drive shaft located on the same line as the second drive shaft; a first decelerator having one end portion coupled to the first drive shaft of the first drive motor and the other end portion coupled to the body in such a way as to amplify torque output from the first drive motor to enable the first drive motor to roll with respect to the body; a second decelerator coupled to the second drive shaft of the second drive motor in such a way as to amplify torque output from the second drive motor to allow a knee pitch joint connected thereto to be rotatable; and a third decelerator located between the third drive motor and the second decelerator in such a way as to be coupled to the third drive shaft of the third drive motor to amplify torque output from the third drive motor and thus allow a hip pitch joint connected thereto to be rotatable.

According to one aspect of the present invention, the multi-legged robot may further include a power and communication module coupled to the drive module in such a way as to provide power and communication selectively to the first drive motor, the second drive motor, and the third drive motor.

According to one aspect of the present invention, the power and communication module may include power connectors electrically connected to power parts located on the first drive motor, the second drive motor, and the third drive motor and communication connectors connected to communication parts located on the first drive motor, the second drive motor, and the third drive motor.

According to one aspect of the present invention, the first drive motor may have a first through hole formed on one surface thereof in such a way as to expose the power part and the communication part thereof therethrough, and the second drive motor or the third drive motor may have a second through hole formed on one surface thereof in such a way as to expose the power parts and the communication parts thereof therethrough, so that the power and communication module may cover the first through hole and the second through hole and perform power and communication connection.

According to one aspect of the present invention, the power and communication module may include: a module frame; a PCB substrate coupled to the inside of the module frame to mount the power connectors and the communication connectors thereon; and a waterproofing plate for passing the power connectors and the communication connectors therethrough and performing waterproofing when coupled to the first through hole and the second through hole.

According to one aspect of the present invention, the waterproofing plate may include a first waterproofing O-ring having the shape of a ring corresponding to the first through hole in such a way as to be inserted into the first through hole to prevent a gap with respect to the first through hole from occurring and a second waterproofing O-ring having the shape of a ring corresponding to the second through hole in such a way as to be inserted into the second through hole to prevent a gap with respect to the second through hole from occurring.

According to one aspect of the present invention, the third drive shaft of the third drive motor may be a hollow shaft, and the second drive shaft of the second drive motor may be coupled to the hollow portion of the third drive shaft, while having any interference with the third drive shaft, in such a way as to allow the end portion of the third drive shaft to be exposed to the outside from the end portion of the second drive shaft, so that the second decelerator may be fittedly coupled to the end portion of the second drive shaft and the third decelerator may be fittedly coupled to the end portion of the third drive shaft.

According to one aspect of the present invention, at least one of the first decelerator, the second decelerator, and the third decelerator may include: a decelerator body having a hole member in which a coupling hole is formed to couple the drive shaft thereto; a decelerator-covering member coupled to one side of the decelerator body in such a way as to pass the hole member therethrough; and a cross roller bearing located on a region where the outer periphery of the decelerator body and the outer periphery of the decelerator-covering member are brought into close contact with each other to perform waterproofing between the decelerator body and the decelerator-covering member.

According to one aspect of the present invention, the at least one of the first decelerator, the second decelerator, and the third decelerator may further include a waterproofing O-ring located on a region where the decelerator body and the cross roller bearing are brought into close contact with each other and a waterproofing O-ring located on a region where the decelerator-covering member and the cross roller bearing are brought into close contact with each other.

According to one aspect of the present invention, the cross roller bearing may have the shape of a ring whose vertical section is rectangular, the decelerator body may have a stepped portion coming into close contact with one vertex area of the cross roller bearing, and the decelerator-covering member may have a stepped portion coming into close contact with the other vertex area of the cross roller bearing.

### Advantageous Effects of the Invention

According to the present invention, the multi-legged robot can allow the legs to be provided with the drive modules each having the plurality of modularized drive motors to thus unify and simplify the power supply structures and the communication connection structures so that the legs can move more freely, without having any limitations in their motion.

According to the present invention, further, the multi-legged robot can apply the waterproofing structure to the coupled structure between the drive module and the power and communication module, thereby preventing external substances such as liquids from entering the drive module and apply the waterproofing structures to the respective decelerators, thereby preventing external substances from entering the decelerators.

### Brief Description of Drawings

FIG. 1 is a schematic concept view showing a multi-legged robot according to an embodiment of the present invention.
FIG. 2 is a perspective view showing a leg of FIG. 1.
FIG. 3 shows an internal configuration of the leg of FIG. 2.
FIG. 4 is an exploded perspective view showing the leg of FIG. 2.
FIG. 5 is a bottom perspective view showing a coupled state of a portion of the leg of FIG. 4.
FIG. 6 is an enlarged view showing a coupled structure of a power and communication module of FIG. 5.
FIG. 7 is an exploded perspective view showing the power and communication module of FIG. 6.
FIG. 8 shows a waterproofing structure of a decelerator of FIG. 2.

### Mode for Disclosure

Objects, characteristics and advantages of the present invention will be more clearly understood from the detailed description as will be described below and the attached drawings, and it is to be appreciated that those skilled in the art can change or modify the embodiments without departing from the scope and spirit of the present invention. If it is determined that the detailed explanation on the well-known technology related to the present invention makes the scope of the present invention not clear, the explanation will be avoided for the brevity of the description. In the description, the same reference numerals will be used to describe the same components.

Hereinafter, embodiments of the present invention will be explained in detail with reference to the attached drawings.

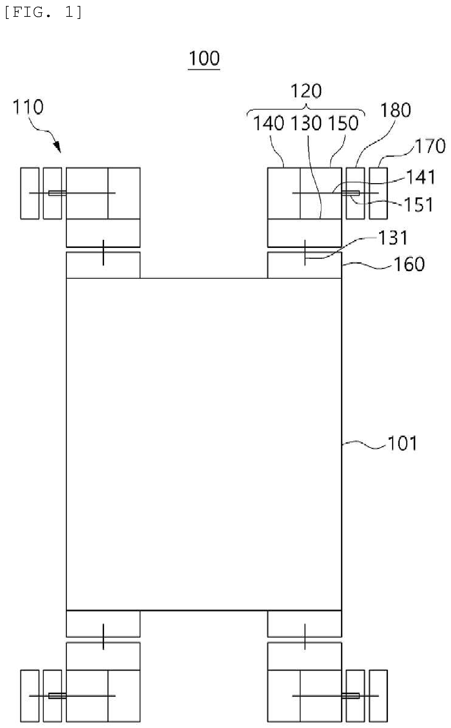

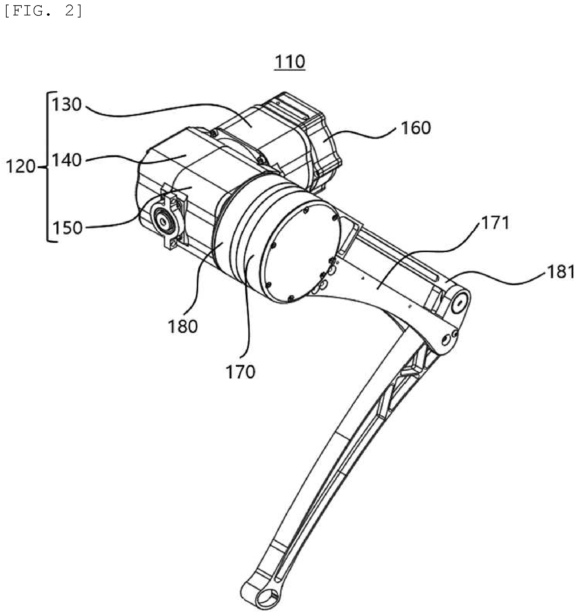

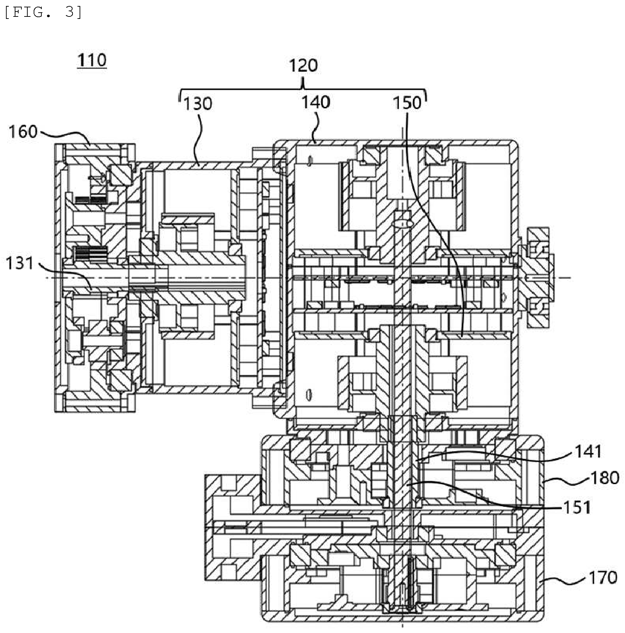

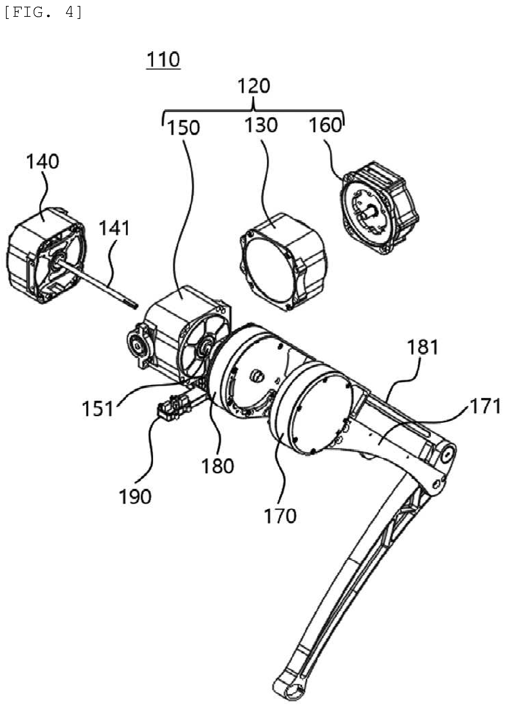

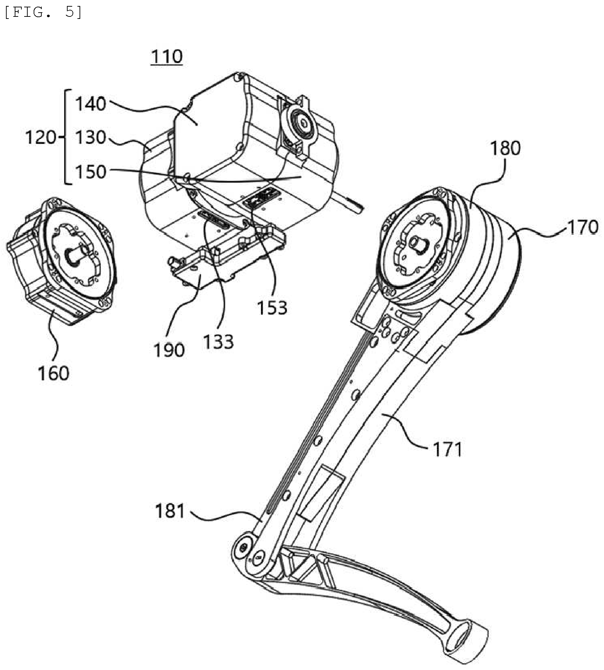

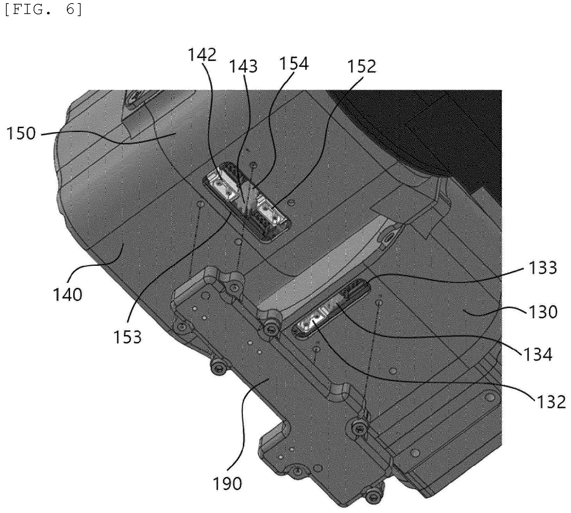

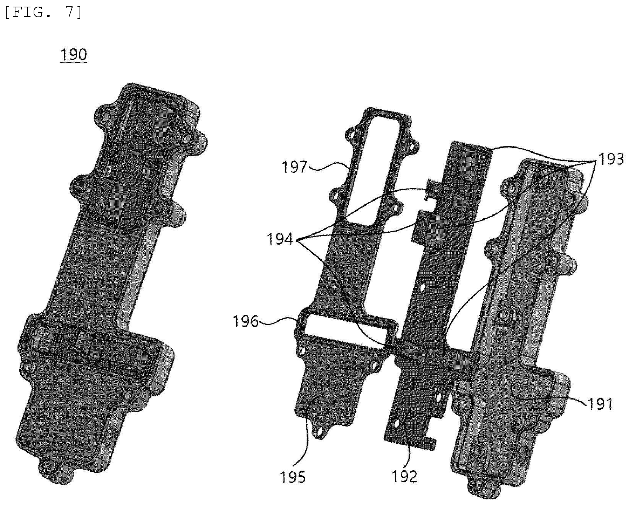

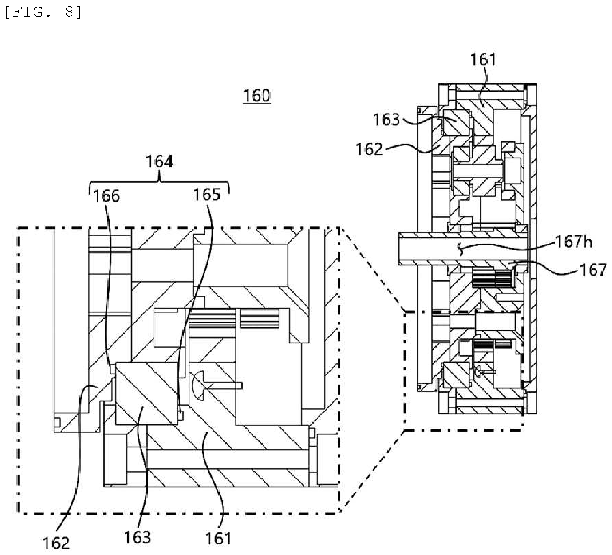

FIG. 1 is a schematic concept view showing a multi-legged robot according to an embodiment of the present invention, FIG. 2 is a perspective view showing a leg of FIG. 1, FIG. 3 shows an internal configuration of the leg of FIG. 2, FIG. 4 is an exploded perspective view showing the leg of FIG. 2, FIG. 5 is a bottom perspective view showing a coupled state of a portion of the leg of FIG. 4, FIG. 6 is an enlarged view showing a coupled structure of a power and communication module of FIG. 5, FIG. 7 is an exploded perspective view showing the power and communication module of FIG. 6, and FIG. 8 shows a waterproofing structure of a decelerator of FIG. 2.

Referring first to FIG. 1, a multi-legged robot 100 according to an embodiment of the present invention includes a body 101 and a plurality of legs 110, that is, four legs 110 coupled to four corners of the body 101.

Under the above configuration, the multi-legged robot 100 moves to a desired place, while avoiding contacts with obstacles or stepping on or passing over the obstacles, and through the configurations of the legs 110, the multi-legged robot 100 performs the movement, while keeping a balance at a stable speed.

According to the embodiment of the present invention, as schematically shown in FIG. 1, the body 101 is a basic body of the multi-legged robot 100 and has the four corners to which the four legs 110 capable of various motions are coupled.

Even though not shown in detail, each leg 110 is modularized and thus detachably attached to the body 101, so that among the legs 110, the leg 110 whose maintenance is needed is separated from the body 101, and next, it is replaced with a new leg 110. Otherwise, the leg 110 is repaired and then coupled back to the body 101.

According to the embodiment of the present invention, each leg 110 includes a drive module 120 having modularized drive motors 130, 140, and 150 and decelerators 160, 170, and 180 coupled to the drive module 120.

To be more specific, as shown in FIGs. 1 to 5, the drive module 120 includes a first drive motor 130 for generating a drive force for rotating a first drive shaft 131, a second drive motor 140 located on one side of the rear end of the first drive motor 130 and having a second drive shaft 141 located horizontally with respect to the first drive shaft 131, and a third drive motor 150 coupled to the front end of the second drive motor 140 and having a third drive shaft 151 located on the same line as the second drive shaft 141.

Like this, the drive module 120 has a configuration in which the three drive motors 130, 140, and 150 are modularized. In the case of the conventional configuration, as mentioned above, the first decelerator is connected to the first drive motor, the second decelerator is connected to the second drive motor, and the third decelerator is connected to third drive motor, so that power should be connected to the respective drive motors, which makes power supply structures become complicated and has limitations in the motions of the parts consisting of the drive motors and the decelerators. According to the embodiment of the present invention, however, the drive module 120 greatly simplifies both of power connection structures and communication connection structures by means of the modularization of the drive motors 130, 140, and 150. This will be discussed later.

The first decelerator 160 is connected to the first drive shaft 131 of the first drive motor 130 of the drive module 120. Referring to FIGs. 1 to 3, according to the embodiment of the present invention, the first decelerator 160 has one end portion coupled to the first drive shaft 131 of the first drive motor 130 and the other end portion coupled to the body 101 so that the first decelerator 160 amplifies torque output from the first drive motor 130 to enable the first drive motor 130 to roll with respect to the body 101.

To be specific, the first decelerator 160 serves as a decelerator that reduces a high speed rotation of the first drive motor 130 and thus transfers the reduced rotation, so that each leg 110 can roll with respect to the body 101.

Even though not specifically shown, further, the first decelerator 160 is detachably coupled to the body 101. For example, the body 101 has a guide recess adapted to couple the first decelerator 160 thereto, and the first decelerator 160 has a guide member inserted into the guide recess, so that as mentioned above, each leg 110 can be coupled to or separated from the body 101.

As shown in FIGs. 1 to 5, according to the embodiment of the present invention, the second decelerator 170 is coupled to the end portion of the second drive shaft 141 of the second drive motor 140 to convert the rotary force of the second drive motor 140 into rotary torque, so that a knee pitch joint 171 connected to the second decelerator 170 is rotatable.

As shown in detail in FIGs. 1 to 5, according to the embodiment of the present invention, the third decelerator 180 is located between the third drive motor 150 and the second decelerator 170 and coupled to the third drive shaft 151 of the third drive motor 150 to amplify the torque output from the third drive motor 150, so that a hip pitch joint 181 connected to the third decelerator 180 is rotatable.

Like this, the first to third decelerators 160, 170, and 180 are coupled to the first to third modularized drive motors 130, 140, and 150, and by means of the operations of the first to third decelerators 160, 170, and 180, relative roll, hip pitch, and knee pitch on the coupled parts to the first to third decelerators 160, 170 and 180 are performed, thereby allowing each leg 110 to perform optimized motions.

Referring to FIG. 3, according to the embodiment of the present invention, the second drive shaft 141 of the second drive motor 140 are located in the same direction on the same line as the third drive shaft 151 of the third drive motor 150.

To be specific, the third drive shaft 151 of the third drive motor 150 is a hollow shaft, and the second drive shaft 141 of the second drive motor 140 passes through the hollow portion of the third drive shaft 151 of the third drive motor 150 in such a way as to allow the end portion thereof to be exposed to the outside. The second decelerator 170 is coupled to the end portion of the second drive shaft 141 of the second drive motor 140, and the third decelerator 180 is coupled to the end portion of the third drive shaft 151 between the third drive motor 150 and the second decelerator 170.

In this case, the diameter of the second drive shaft 141 is smaller than the inner diameter of the hollow portion of the third drive shaft 151 to allow the second drive shaft 141 to be rotatable with respect to the third drive shaft 151, without any interference with the third drive shaft 151, so that the second decelerator 170 connected to the second drive motor 140 and the third decelerator 180 connected to the third drive motor 150 operate independently of each other.

Further, as mentioned above, each leg 110 of the multi-legged robot 100 according to the present invention has the modularized drive motors 130, 140, and 150 so that the power and communication structures are simplified and the leg is prevented from being limited in their motion, which will be explained with reference to the attached drawings.

Referring to FIGs. 5 to 7, according to the embodiment of the present invention, each leg 110 further includes a power and communication module 190 detachably coupled to the drive module 120 to provide power and communication selectively to the first drive motor 130, the second drive motor 140, and the third drive motor 150.

Referring to FIGs. 5 and 6, the first drive motor 130 has a power part 132 for providing power thereto and a communication part 134 for connecting communication thereto at the inside thereof, and the power part 132 and the communication part 134 are exposed to the outside through a first through hole 133 formed on the underside of the first drive motor 130.

In the same manner as above, the second drive motor 140 or the third drive motor 150 has a power part 142 and a communication part 143 for the second drive motor 140 and a power part 152 and a communication part 154 for the third drive motor 150 at one region of the inside thereof, and according to the embodiment of the present invention, the power part 142 and the communication part 143 for the second drive motor 140 and the power part 152 and the communication part 154 for the third drive motor 150 are provided on the inner space of the third drive motor 150. They are exposed to the outside through a second through hole 153 formed on the underside of the third drive motor 150.

Even though not shown, of course, the respective drive motors may have through holes on the undersides thereof in such a way as to allow their power parts and communication parts to be exposed to the outside therethrough. To be specific, three through holes corresponding to the three drive motors may be formed so that the power parts and the communication parts of the corresponding drive motors are exposed to the outside through the corresponding through holes.

If the power and communication module 190 is coupled to the first through hole 133 and the second through hole 153, power supply and communication connection to the first drive motor 130, the second drive motor 140, and the third drive motor 150 are performed.

Referring to FIG. 7, according to the embodiment of the present invention, the power and communication module 190 includes power connectors 193 electrically connected to the power parts 132, 142, and 152 of the first drive motor 130, the second drive motor 140, and the third drive motor 150 and communication connectors 194 connected to the communication parts 134, 143, and 154 thereof.

To be more specific, as shown in FIGs. 5 to 7, the power and communication module 190 includes a plate-shaped module frame 191 for covering the through holes 133 and 153, a PCB substrate 192 coupled to the inside of the module frame 191 to mount the power connectors 193 and the communication connectors 194 thereon, and a waterproofing plate 195 for passing the power connectors 193 and the communication connectors 194 therethrough and performing waterproofing when coupled to the power connectors 193 and the communication connectors 194.

If the power and communication module 190 is fittedly coupled to the through holes 133 and 153 of the drive module 120, the connection between the power connectors 193 and the power parts 132, 142, and 152 and the connection between the communication connectors 194 and the communication parts 134, 143, and 154 are performed, so that the power supply and the communication connection for the first drive motor 130, the second drive motor 140, and the third drive motor 150 can be performed with a single structure.

In the conventional technologies, as mentioned above, a power line for connecting power to the first drive motor, a power line for connecting power to the second drive motor, and a power line for connecting power to the third drive motor are provided separately, thereby making power connection structures complicated, and further, the legs 110 have limitations in their motion due to the plurality of power lines. According to the embodiment of the present invention, however, one power and communication module 190 is coupled to the drive module 120 to allow both of the power supply and the communication connection to be performed for the drive motors 130, 140, and 150, so that the legs 110 are simplified in their structure and move more freely.

As shown in FIG. 7, the waterproofing plate 195 of the power and communication module 190 includes a first waterproofing O-ring 196 having the shape of a ring corresponding to the first through hole 133 and adapted to be inserted into the first through hole 133 to prevent a gap with respect to the first through hole 133 from occurring and a second waterproofing O-ring 197 having the shape of a ring corresponding to the second through hole 153 and adapted to be inserted into the second through hole 153 to prevent a gap with respect to the second through hole 153 from occurring.

As mentioned above, the through holes may be formed on the respective drive motors, and in this case, of course, the O-rings of the waterproofing plate 195 may be provided correspondingly to the through holes.

If the multi-legged robot 100 of the present invention operates, therefore, foreign substances such as water, and the like are prevented from entering the drive motors by means of the waterproofing structure of the power and communication module 190, thereby strengthening the durability of the multi-legged robot 100.

Further, the first decelerator 160, the second decelerator 170, and the third decelerator 180 have the same configuration as one another, and they have waterproofing structures. Hereinafter, the waterproofing structures of the decelerators 160, 170, and 180 will be explained with reference to FIG. 8.

FIG. 8 shows a waterproofing structure of the decelerator of FIG. 2.

As mentioned above, the decelerators 160, 170, and 180 have the same configuration as one another, and herein, an example of the first decelerator 160 will be described. According to the embodiment of the present invention, the first decelerator 160 includes a decelerator body 161 having a hole member 167 in which a coupling hole 167h to which the first drive shaft 131 of the first drive motor 130 is coupled, a decelerator-covering member 162 coupled to one side of the decelerator body 161 in such a way as to pass the hole member 167 therethrough, and a cross roller bearing 163 located on a region where the outer periphery of the decelerator body 161 and the outer periphery of the decelerator-covering member 162 are brought into close contact with each other to perform waterproofing between the decelerator body 161 and the decelerator-covering member 162.

Under the above configuration, the first decelerator 160 has a waterproofing function. To be specific, the decelerator body 161 and the decelerator-covering member 162 are simply coupled to each other, while placing the cross roller bearing 163 therebetween, thereby having a firm waterproofing structure and preventing external substances such as a liquid, and the like from entering the first decelerator 160.

To be more specific, a waterproofing O-ring 165 is located on a region where the decelerator body 161 and the cross roller bearing 163 are brought into close contact with each other, and a waterproofing O-ring 166 is located on a region where the decelerator-covering member 162 and the cross roller bearing 163 are brought into close contact with each other, so that the O-rings 165 and 166 prevent external substances from entering the first decelerator 160.

In this case, the cross roller bearing 163 has the shape of a ring whose vertical section is rectangular, and the decelerator body 161 has a stepped portion coming into close contact with one vertex area of the cross roller bearing 163. As a result, a path along which external substances come becomes complicated, and as the O-ring 165 is provided on the region where the decelerator body 161 and the cross roller bearing 163 are brought into close contact with each other, the waterproofing function can be strengthened.

In the same manner as above, the decelerator-covering member 162 has a stepped portion coming into close contact with the other vertex area of the cross roller bearing 163, and the O-ring 166 is formed on the region where the decelerator-covering member 162 and the cross roller bearing 163 are brought into close contact with each other, so that external substances are prevented from entering a space between the decelerator-covering member 162 and the cross roller bearing 163.

According to the embodiment of the present invention, like this, the drive module 120 in which the plurality of drive motors 130, 140, and 150 are modularized is provided to allow the power supply structures and the communication connection structures of the drive motors 130, 140, and 150 to be unified and simplified, so that each leg 110 does not have any limitations in their motion, thereby moving more freely.

Further, as the waterproofing structure is applied to the coupled structure between the drive module 120 and the power and communication module 190, thereby preventing external substances such as liquids from entering the drive module 120, and the waterproofing structures are applied to the respective decelerators 160, 170, and 180, thereby preventing external substances from entering the decelerators 160, 170, and 180.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

The present invention may be modified in various ways and may have several exemplary embodiments. Specific exemplary embodiments of the present invention are illustrated in the drawings and described in detail in the detailed description. However, this does not limit the invention within specific embodiments and it should be understood that the invention covers all the modifications, equivalents, and replacements within the idea and technical scope of the invention.

## Claims

1. A multi-legged robot comprising:
a body; and
a plurality of legs coupled to the body,
wherein each leg comprises:
a drive module comprising first to third drive motors modularized, the first drive motor for generating a drive force for rotating a first drive shaft, the second drive motor located on one side of the rear end of the first drive motor and having a second drive shaft located horizontally with respect to the first drive shaft, and the third drive motor coupled to the front end of the second drive motor and having a third drive shaft located on the same line as the second drive shaft;
a first decelerator having one end portion coupled to the first drive shaft of the first drive motor and the other end portion coupled to the body in such a way as to amplify torque output from the first drive motor to enable the first drive motor to roll with respect to the body;
a second decelerator coupled to the second drive shaft of the second drive motor in such a way as to amplify torque output from the second drive motor to allow a knee pitch joint connected thereto to be rotatable; and
a third decelerator located between the third drive motor and the second decelerator in such a way as to be coupled to the third drive shaft of the third drive motor to amplify torque output from the third drive motor and thus allow a hip pitch joint connected thereto to be rotatable.

2. The multi-legged robot according to claim 1, further comprising a power and communication module coupled to the drive module in such a way as to provide power and communication selectively to the first drive motor, the second drive motor, and the third drive motor.

3. The multi-legged robot according to claim 2, wherein the power and communication module comprises power connectors electrically connected to power parts located on the first drive motor, the second drive motor, and the third drive motor and communication connectors connected to communication parts located on the first drive motor, the second drive motor, and the third drive motor.

4. The multi-legged robot according to claim 3, wherein the first drive motor has a first through hole formed on one surface thereof in such a way as to expose the power part and the communication part thereof therethrough, and the second drive motor or the third drive motor has a second through hole formed on one surface thereof in such a way as to expose the power parts and the communication parts thereof therethrough, whereby the power and communication module covers the first through hole and the second through hole and thus performs power and communication connection.

5. The multi-legged robot according to claim 4, wherein the power and communication module comprises:
a module frame;
a PCB substrate coupled to the inside of the module frame to mount the power connectors and the communication connectors thereon; and
a waterproofing plate for passing the power connectors and the communication connectors therethrough and performing waterproofing when coupled to the first through hole and the second through hole.

6. The multi-legged robot according to claim 5, wherein the waterproofing plate comprises a first waterproofing O-ring having the shape of a ring corresponding to the first through hole in such a way as to be inserted into the first through hole to prevent a gap with respect to the first through hole from occurring and a second waterproofing O-ring having the shape of a ring corresponding to the second through hole in such a way as to be inserted into the second through hole to prevent a gap with respect to the second through hole from occurring.

7. The multi-legged robot according to claim 1, wherein the third drive shaft of the third drive motor is a hollow shaft, and the second drive shaft of the second drive motor is coupled to the hollow portion of the third drive shaft, while having any interference with the third drive shaft, in such a way as to allow the end portion of the third drive shaft to be exposed to the outside from the end portion of the second drive shaft, whereby the second decelerator is fittedly coupled to the end portion of the second drive shaft and the third decelerator is fittedly coupled to the end portion of the third drive shaft.

8. The multi-legged robot according to claim 1, wherein at least one of the first decelerator, the second decelerator, and the third decelerator comprises:
a decelerator body having a hole member in which a coupling hole is formed to couple the drive shaft thereto;
a decelerator-covering member coupled to one side of the decelerator body in such a way as to pass the hole member therethrough; and
a cross roller bearing located on a region where the outer periphery of the decelerator body and the outer periphery of the decelerator-covering member are brought into close contact with each other to perform waterproofing between the decelerator body and the decelerator-covering member.

9. The multi-legged robot according to claim 8, further comprising a waterproofing O-ring located on a region where the decelerator body and the cross roller bearing are brought into close contact with each other and a waterproofing O-ring located on a region where the decelerator-covering member and the cross roller bearing are brought into close contact with each other.

10. The multi-legged robot according to claim 8, wherein the cross roller bearing has the shape of a ring whose vertical section is rectangular, the decelerator body has a stepped portion coming into close contact with one vertex area of the cross roller bearing, and the decelerator-covering member has a stepped portion coming into close contact with the other vertex area of the cross roller bearing.
